# EUROPÄISCHE PATENTSCHRIFT

(11) **EP 0 944 469 B1**
(45) Veröffentlichungstag und Bekanntmachung des Hinweises auf die Patenterteilung: **12.09.2001**
(21) Anmeldenummer: 97952893.2
(22) Anmeldetag: 06.12.1997
(51) Int. Cl.: B29C 65/06, F15B 1/26

(54) **BEHÄLTER**
CONTAINER
RECIPIENT

(30) Priorität: 11.12.1996 DE 19651387
(43) Veröffentlichungstag der Anmeldung: 29.09.1999
(73) Patentinhaber: ZF FRIEDRICHSHAFEN AG, 88038 Friedrichshafen (DE)
(72) Erfinder: MERZ, Johann, D-73527 Schwäbisch Gmünd (DE)
(74) Vertreter: Wiechmann, Manfred
(86) Internationale Anmeldenummer: EP9706828
(87) Internationale Veröffentlichungsnummer: WO9825756

(56) Entgegenhaltungen:
- EP-A- 0 687 547
- FR-A- 2 713 540
- GB-A- 2 116 667
- GB-A- 2 217 255
- NL-A- 277 817
- NL-A- 7 011 090
- US-A- 3 247 302
- DATABASE WPI Section Ch, Week 7732 Derwent Publications Ltd., London, GB; Class A35, AN 77-56465Y XP002062870 -& JP 52 076 383 A (ASAHI CHEM IND CO LTD) , 27.Juni 1977

## Beschreibung

Die Erfindung betrifft einen Behälter, insbesondere einen Strömungsmittelbehälter, aus Kunststoff, nach dem Oberbegriff des Anspruches 1. Der Behälter weist einen durch einen Deckel verschließbaren Behältertopf auf. Der Deckel und der Behältertopf sind in ihrer Lage zueinander fixiert.

Solche Behälter finden als Strömungsmittelbehälter beispielsweise bei hydraulischen Lenkanlagen Verwendung. Sie dienen dabei als Vorrats- und Ausgleichsbehälter für Strömungsmittel, das von einer Servopumpe zu der Lenkanlage gefördert wird und von dort in den Strömungsmittelbehälter zurückfließt.

Der Deckel kann mit dem Behältertopf auf unterschiedliche Weise verbunden sein. Bei einem Ölbehälter nach der DE-C2-31 41 728 ist der Deckel mit einer Schraubkappe auf einer Schraube, die an dem Behältertopf befestigt ist, gehalten.

Bei einem anderen Ölbehälter nach der DE-C2-27 42 610 ist der Deckel direkt auf den Behältertopf aufgeschraubt.

In neuerer Zeit wurde vorgeschlagen, bei einem Strömungsmittelbehälter, bei dem der Deckel mit dem Behältertopf unlösbar verbunden werden kann, den Deckel mit dem Behältertopf durch ein Reibschweißverfahren zu verbinden. Bei der Anwendung dieses Verfahrens hat sich jedoch herausgestellt, daß beim Reibschweißen von Strömungsmittelbehältern aus Kunststoff zu beiden Seiten der Schweißnaht unerwünschte Kunststoffpartikel, der sogenannte "Schweißaustrieb" entstehen können, die den Behälter innen und außen verunreinigen können.

Aus der NL-A-7 011 090, die als der der Erfindung nächsliegender Stand der Technik zu betrachten ist, ist ein Halter oder Behälter aus Kunststoff bekannt, bei dem zwei zu verbindende Teile sich in Bezug aufeinander nicht bewegen, während ein drittes, ringeförmiges Teil in Bezug auf die zwei genannten Teile rotiert und mit den beiden Teilen eine Verbindungsstelle bildet. Mit dem in dieser Druckschrift beschriebenen Verfahren zum Verbinden von zwei zylindrischen und/oder im Querschnitt kreisförmigen Teilen unter Anwendung von Drehreibschweißen ist es nicht möglich, Teile miteinander zu verbinden, die keinen rotationssymmetrischen Querschnitt aufweisen.

Der Erfindung liegt deshalb die Aufgabe zugrunde, einen Behälter der bekannten Art derart zu verbessern, daß ein Reibschweißverfahren auch bei nicht rotationssymmetrischen Behältern angewendet werden kann und daß auch bei Anwendung eines Reibschweißverfahrens keine Kunststoffpartikel ins Innere des Behälters gelangen.

Diese Aufgabe wird durch den im Anspruch 1 gekennzeichneten Behälter gelöst. Dazu weisen der Behältertopf und der Deckel je eine Fläche auf, die als Planflächen ausgebildet und zueinander benachbart sind. Diese beiden benachbarten Flächen übergreift eine ebene Schweißplatte aus Kunststoff, die an die benachbarten Flächen angepaßt ist. Wird nun diese Schweißplatte in eine oszillierende Bewegung gegenüber den beiden in ihrer Lage fixierten Teilen, Deckel und Behältertopf, gebracht, so werden über die Schweißplatte der Behältertopf und der Deckel dichtend miteinander verbunden. Schweißaustrieb, der bei der Anwendung des Reibschweißverfahrens entsteht, kann nur außerhalb der Schweißzone nach außen austreten, nicht jedoch in das Innere des Behälters gelangen.

Zweckmäßige und vorteilhafte Ausgestaltungen der Erfindung sind in den Unteransprüchen angegeben. Wenn die beiden benachbarten Flächen des Behältertopfes und des Dekkels als Planflächen ausgebildet sind, die in einer Ebene liegen, so kann die Schweißplatte ebenfalls eine einfach herzustellende, ebene Form aufweisen. Besonders zuverlässig wird verhindert, daß Schweißaustrieb ins Innere des Behälters gelangt, wenn der Deckel und der Behältertopf in ihrer Lage zueinander an einer Trennfuge aneinander angepaßt und durch einen Einpaß fixiert sind, der einen Absatz aufweist. Zur genaueren Definition der Lage der Schweißzone weist die Schweißplatte wenigstens im Ausgangszustand im Bereich der Trennfuge einen Vorsprung auf. Aus diesem Vorsprung wird das Material entnommen, das für die Reibschweißung benötigt wird. Damit auch nach außen kein Schweißaustrieb austreten kann, kann die Schweißplatte außerhalb der Schweißzone eine Nut für die Aufnahme des Schweißaustriebs aufweisen.

Im folgenden wird die Erfindung anhand eines in der Zeichnung dargestellten Ausführungsbeispieles näher erläutert.
Es zeigen:

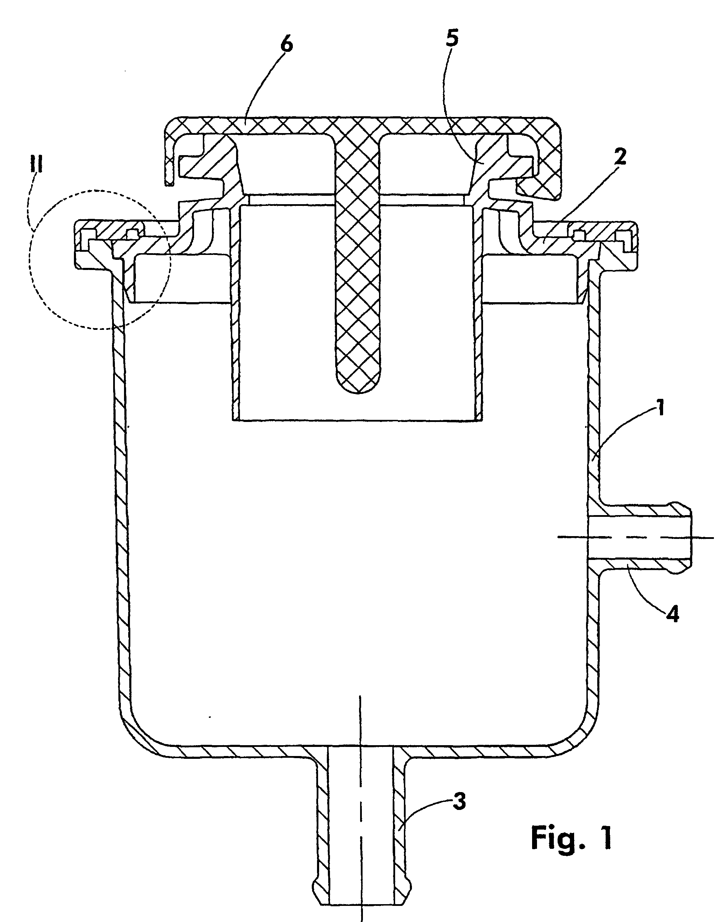

- Fig. 1: einen Längs-Schnitt durch den erfindungsgemäßen Behälter und
- Fig. 2: einen Teil-Schnitt der Stelle II aus Fig. 1 in vergrößertem Maßstab.

Der Behälter besitzt einen Behältertopf 1, der von einem Deckel 2 verschlossen ist. Der Behältertopf 1 weist einen mit einer nicht dargestellten Servopumpe verbundenen Zulaufanschluß 3 und einen Rücklaufanschluß 4 auf. Zwischen den beiden Anschlüssen 3 und 4 befindet sich normalerweise ein Filtereinsatz, der jedoch nicht dargestellt ist, da er nicht zur Erfindung gehört.

Der Deckel 2 weist einen Einfüllstutzen 5 auf, der durch einen Verschlußdeckel 6 verschlossen werden kann.

Der Behältertopf 1 und der Deckel 2 berühren sich an einer Trennfuge 7. Beide Teile sind an dieser Trennfuge 7 aneinander angepaßt. Dadurch entsteht ein Einpaß 8, der den Behältertopf 1 und den Deckel 2 in ihrer Lage zueinander fixiert. Der Einpaß 8 weist einen Absatz 9 auf.

An dem Behältertopf 1 und dem Deckel 2 ist je eine Fläche 10 bzw. 11 angeordnet, die zueinander benachbart sind. In dem Ausführungsbeispiel sind diese beiden Flächen 10 und 11 als Planflächen ausgebildet, die in einer Ebene liegen.

Eine Schweißplatte 12 übergreift die benachbarten Flächen 10 und 11 des Behältertopfes 1 und des Deckels 2. Die Schweißplatte 12 ist an ihrer dem Behältertopf 1 und dem Deckel 2 zugewandten Fläche 13 an die beiden Flächen 10 und 11 angepaßt. Dies ist besonders einfach möglich, wenn die beiden Flächen 10 und 11, wie in dem Ausführungsbeispiel dargestellt, als Planflächen ausgebildet sind, die in einer Ebene liegen. Die beiden benachbarten Flächen 10 und 11 müssen jedoch nicht als ebene Flächen ausgebildet sein. Es sind auch Flächen vorstellbar, die unter einem Winkel zueinander stehen, beispielsweise Kegelstumpfflächen. Wesentlich ist jedoch, daß die Fläche 13 der Schweißplatte 12 an die Flächen 10 und 11 angepaßt ist.

Die Schweißplatte 12 wird mit dem Behältertopf 1 und dem Deckel 2 durch ein Reibschweißverfahren dadurch dichtend verbunden, daß die Schweißplatte 12 in eine oszillierende Bewegung relativ zu dem Behältertopf 1 und dem Dekkel 2 versetzt wird. Der Behältertopf 1, der Deckel 2 und die Schweißplatte 12 bestehen aus Kunststoff.

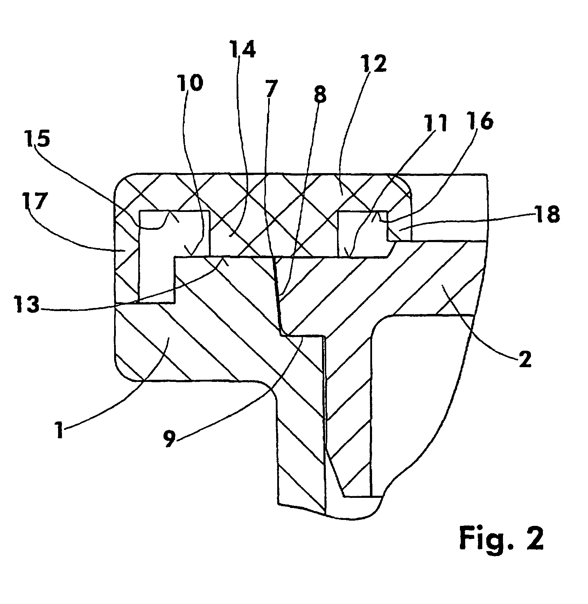

Insbesondere aus Fig. 2 ist zu erkennen, daß Kunststoffpartikel, die bei dem Reibschweißverfahren als Schweißaustrieb entstehen, wegen der engen Trennfuge 7 und dem Absatz 9 nicht in das Innere des Behältertopfes 1 gelangen können.

Die Fläche 13 stellt das Ende eines Vorsprunges 14 dar, der an der Schweißplatte 12 gebildet ist und in Richtung auf den Behältertopf 1 und den Deckel 2 vorsteht. Der Vorsprung 14 liefert das für die Schweißung benötigte Material.

In dem Ausführungsbeispiel ist die Schweißplatte 12 auf einen relativ kleinen Bereich zu beiden Seiten der Trennfuge 7 begrenzt. Um zu verhindern, daß Schweißaustrieb, der zu beiden Seiten der Fläche 13 hervortreten kann, den Strömungsmittelbehälter außen verunreinigt, sind zu beiden Seiten des Vorsprunges 14 Nuten 15 und 16 vorgesehen. Die Nuten 15 und 16 sind nach außen durch Wände 17 bzw. 18 abgeschlossen, die nach Beendigung des Reibschweißverfahrens an dem Behältertopf 1 bzw. an dem Deckel 2 anliegen. Mit gleicher Wirkung können die Nuten auch in den beiden Flächen 10 und 11 entsprechend angeordnet sein.

Der Querschnitt des Strömungsmittelbehälters ist für die erfindungsgemäße Ausgestaltung nicht wesentlich. Je nach den vorgegebenen Einbaumöglichkeiten kann es zweckmäßig sein, einen rechteckigen Querschnitt mit ebenen Wänden oder einen kreisrunden Querschnitt zu wählen.

### Bezugszeichen

- 1: Behältertopf
- 2: Deckel
- 3: Zulaufanschluß
- 4: Rücklaufanschluß
- 5: Einfüllstutzen
- 6: Verschlußdeckel
- 7: Trennfuge
- 8: Einpaß
- 9: Absatz
- 10: Fläche
- 11: Fläche
- 12: Schweißplatte
- 13: Fläche
- 14: Vorsprung
- 15: Nut
- 16: Nut
- 17: Wand
- 18: Wand

## Patentansprüche

1. Behälter, insbesondere Strömungsmittelbehälter, aus Kunststoff, mit einem durch einen Deckel (2) verschließbaren Behältertopf (1), wobei der Deckel (2) und der Behältertopf (1) in ihrer Lage zueinander fixiert sind,
**gekennzeichnet durch** folgende Merkmale:
- der Behältertopf (1) und der Deckel (2) weisen je eine Fläche (10, 11) auf, die *als Planflächen ausgebildet und* zueinander benachbart sind,
- eine ebene Schweißplatte (12) aus Kunststoff übergreift die benachbarten Flächen (10, 11) des Behältertopfes (1) und des Deckels (2),
- die Schweißplatte (12) ist an die benachbarten Flächen (10, 11) angepaßt,
- der Behältertopf (1) und der Deckel (2) sind über die Schweißplatte (12) durch ein Reibschweißverfahren dichtend miteinander verbunden,
- *bei dem Reibschweißverfahren wird die Schweißplatte (12) in eine oszillierende Bewegung relativ zu dem Behältertopf (1) und dem Deckel (2) versetzt.*

2. Behälter nach Anspruch 1, **dadurch gekennzeichnet, daß** die beiden benachbarten Flächen (10, 11) des Behältertopfes (1) und des Deckels (2) Planflächen sind, die in einer Ebene liegen.

3. Behälter nach einem der Ansprüche 1 oder 2, **dadurch gekennzeichnet**, daß der Deckel (2) und der Behältertopf (1) in ihrer Lage zueinander an einer Trennfuge (7) aneinander angepaßt und durch einen Einpaß (8) fixiert sind, der einen Absatz (9) aufweist.

4. Behälter nach einem der Ansprüche 1 bis 3, **dadurch gekennzeichnet**, daß die Schweißplatte (12) wenigstens im Ausgangszustand im Bereich der Trennfuge (7) in der Schweißzone einen Vorsprung (14) aufweist.

5. Behälter nach Anspruch 4, **dadurch gekennzeichnet, daß** die Schweißplatte (12) innerhalb und außerhalb ihrer Schweißzone je eine Nut (15, 16) für die Aufnahme von Schweißaustrieb, der bei der Anwendung des Reibschweißverfahrens entsteht, aufweist.

6. Behälter nach Anspruch 4, **dadurch gekennzeichnet, daß** die Flächen (10, 11) innerhalb und außerhalb der Schweißzone je eine Nut für die Aufnahme von Schweißaustrieb, der bei der Anwendung des Reibschweißverfahrens entsteht, aufweisen.

7. Behälter nach einem der Ansprüche 1 bis 6, **dadurch gekennzeichnet**,
- daß der Behälter rotationssymmetrisch ausgebildet ist,
- daß die beiden benachbarten Flächen (10, 11) des Behältertopfes (1) und des Deckels (2) rotationssymmetrisch ausgebildet sind,
- daß der Einpaß (8) einen abgesetzten Durchmesser aufweist,
- daß der Vorsprung (14) der Schweißplatte (12) und die Nuten (15, 16) für die Aufnahme des Schweißaustriebs kreisringförmig ausgebildet sind.

## Claims

1. Container, in particular hydraulic fluid container, which is made of plastic and has a container cup (1) which can be closed by a cover (2), the cover (2) and the container cup (1) being fixed in their position with respect to each other, **characterized by** the following features:
- the container cup (1) and the cover (2) each have a surface (10, 11) which *are designed as flat surfaces and* are adjacent to each other,
- a *planar* welding plate (12) made of plastic fits over the adjacent surfaces (10, 11) of the container cup (1) and the cover (2),
- the welding plate (12) is matched to the adjacent surfaces (10, 11),
- the container cup (1) and the cover (2) are connected in a sealing manner to each other via the welding plate (12) by means of a friction-welding process,
- *in the friction-welding process the welding plate (12) is made to oscillate relative to the container cup (1) and the cover (2)*.

2. Container according to Claim 1, **characterized in that** the two adjacent surfaces (10, 11) of the container cup (1) and the cover (2) are flat surfaces lying in one plane.

3. Container according to one of Claims 1 or 2, **characterized in that** in their position with respect to each other the cover (2) and the container cup (1) are matched to each other at a separating line (7) and are fixed by means of a fitting (8) which has a shoulder (9).

4. Container according to one of Claims 1 to 3, **characterized in that** at least in the initial state the welding plate (12) has a projection (14) in the welding zone in the region of the separating line (7).

5. Container according to Claim 4, **characterized in that** within and outside its welding zone the welding plate (12) has a respective groove (15, 16) for receiving excess welding material which is produced when the friction-welding process is used.

6. Container according to Claim 4, **characterized in that** the surfaces (10, 11) within and outside the welding zone have a respective groove for receiving excess welding material which is produced when the friction-welding process is used.

7. Container according to one of Claims 1 to 6, characterized
- in that the container is of rotationally symmetrical design,
- in that the two adjacent surfaces (10, 11) of the container cup (1) and the cover (2) are of rotationally symmetrical design,
- in that the fitting (8) has a reduced diameter,
- in that the projection (14) of the welding plate (12) and the grooves (15, 16) for receiving the excess welding material are of ring-shaped design.

## Revendications

1. Récipient, en particulier récipient pour fluide hydraulique en plastique, comprenant un creuset (1) se fermant par un couvercle (2), le couvercle (2) et le creuset (1) étant fixés l'un à l'autre dans leur position, **caractérisé par** les caractéristiques suivantes :
- le creuset (1) et le couvercle (2) présentent chacun une surface (10, 11), lesquelles sont conçues en tant que surfaces planes et sont adjacentes l'une à l'autre,
- une plaque de soudure plane (12) en plastique vient en prise par-dessus les faces adjacentes (10, 11) du creuset (1) et du couvercle (2),
- la plaque de soudure (12) est adaptée aux surfaces adjacentes (10, 11),
- le creuset (1) et le couvercle (2) sont connectés l'un à l'autre de manière étanche par le biais de la plaque de soudure (12) par un procédé de soudage par friction,
- dans le procédé de soudage par friction, la plaque de soudure (12) est déplacée suivant un mouvement d'oscillation par rapport au creuset (1) et au couvercle (2).

2. Récipient selon la revendication 1, **caractérisé en ce que** les deux surfaces adjacentes (10, 11) du creuset (1) et du couvercle (2) sont des surfaces planes, qui se trouvent dans un plan.

3. Récipient selon l'une quelconque des revendications 1 ou 2, **caractérisé en ce que** le couvercle (2) et le creuset (1) sont adaptés l'un à l'autre dans leur position et l'un contre l'autre au niveau d'une ligne de joint (7), et sont fixés par un dispositif de centrage (8) qui présente un retrait (9).

4. Récipient selon l'une quelconque des revendications 1 à 3, **caractérisé en ce que** la plaque de soudure (12) présente au moins dans l'état de départ dans la zone de la ligne de joint (7) une saillie (14) dans la zone de soudure.

5. Récipient selon la revendication 4, **caractérisé en ce que** la plaque de soudure (12) présente, à l'intérieur et à l'extérieur de sa zone de soudure, à chaque fois une rainure (15, 16) pour recevoir les bavures de soudage qui se produisent lors de l'application du procédé de soudage par friction.

6. Récipient selon la revendication 4, **caractérisé en ce que** les surfaces (10, 11) présentent, à l'intérieur et à l'extérieur de la zone de soudure, à chaque fois une rainure pour recevoir les bavures de soudage qui se produisent lors de l'application du procédé de soudage par friction.

7. Récipient selon l'une quelconque des revendications 1 à 6, **caractérisé en ce que** :
- le récipient est conçu avec une symétrie de révolution,
- les deux surfaces adjacentes (10, 11) du creuset (1) et du couvercle (2) sont conçues avec une symétrie de révolution,
- le dispositif de centrage (8) présente un diamètre en retrait,
- la saillie (14) de la plaque de soudure (12) et les rainures (15, 16) pour recevoir les bavures de soudage sont conçues en forme annulaire circulaire.
